# EUROPÄISCHE PATENTSCHRIFT

(11) **EP 1 127 676 B1**
(45) Veröffentlichungstag und Bekanntmachung des Hinweises auf die Patenterteilung: **08.06.2005**
(21) Anmeldenummer: 01103879.1
(22) Anmeldetag: 16.02.2001
(51) Int. Cl.: B29C 51/26

(54) **Vorrichtung zum Verformen von thermoplastischen Materialien**
Apparatus for shaping thermoplastic materials
Dispositif pour la mise en forme de matériaux thermoplastiques

(30) Priorität: 28.02.2000 DE 10009405
(43) Veröffentlichungstag der Anmeldung: 29.08.2001
(73) Patentinhaber: PAUL KIEFEL GMBH, D-83395 Freilassing (DE)
(72) Erfinder: Feil, Jürgen, 83410 Leobendorf (DE)
(74) Vertreter: Zmyj, Erwin, Dipl.-Ing., Dipl.-Wirtsch.-Ing.

(56) Entgegenhaltungen:
- DE-C- 3 643 078
- FR-A- 2 754 209
- GB-A- 2 101 927
- US-A- 3 726 953
- US-A- 4 046 611
- US-A- 4 778 375

## Beschreibung

Die Erfindung bezieht sich auf eine Vorrichtung zum Verformen von thermoplastischen Materialien, umfassend eine Saug-Druckglocke, einen oberen Spannrahmen, einen unteren Spannrahmen, zwischen denen das zu verformende Material einspannbar ist, und ein Unterteil mit Formwerkzeug, wobei zwischen Saug-Druckglocke und dem oberen Spannrahmen eine Dichtung vorgesehen ist.

Vorrichtungen dieser Art sind aus der GB-A-2 101 927 und der FR-A-2 754 209 bekannt. Dort handelt es sich bei der Dichtung zwischen der Saug-Druckglocke und dem oberen Spannrahmen um einfache zusammenquetschbare Dichtung.

Bei einer bekannten Vorrichtung dieser Art werden für den Formvorgang, bei welchem in die Druckglocke Pressluft eingeführt wird, um das Folienmaterial gegen das Formwerkzeug zu drücken, die Druckglocke und das das Formwerkzeug tragende Unterteil durch hydraulisch betätigte Antriebseinrichtung gegeneinander gedrückt, um die bei großen herzustellenden Formteilen erheblichen Kräfte aufzunehmen, die bestrebt sind, die beiden gegeneinander gedrückten Teile, nämlich die Druckglocke und das Unterteil samt den dazwischenliegenden Spannrahmen voneinander zu trennen. Bei großen Teilen, wie z.B. bei Kühlschrankeinsätzen, können dabei sehr große Kräfte, z.B. von 800kN und größer, auftreten. Ein wesentliches Problem, das hierbei auftritt, sind nicht nur die sehr hohen Haltekräfte, die notwendig sind, um die Druckglocke und ihr Unterteil aneinanderzudrücken, sondern es können nur solche Spannrahmen verwendet werden, die im wesentlichen der Länge und Breite der Druckglocke angepasst sind. Wenn dagegen kleinere Formwerkzeuge zur Herstellung kleinerer Teile zum Einsatz kommen sollen, so müssen andere Spannrahmen, d.h. Spannrahmen mit einer wesentlich kleineren Durchgangsöffnung verwendet werden. Da der obere Spannrahmen an der Druckglocke dichtend anliegen muß, erhält dieser Spannrahmen ausgehend von einer Druckglocke für große herzustellende Teile bei einem Übergang auf kleine herzustellende Teile eine verhältnismäßig große Fläche, auf die der Druck in der Druckglocke einwirkt. Die Fläche des Spannrahmens ist deshalb so groß, weil er wegen des kleineren Werkzeuges eine kleine Durchtrittsöffnung hat, aber andererseits bis zum Rand der Druckglocke wegen der Abdichtung reichen muß. Auf diese große Fläche des oberen Spannrahmens wirkt dann der in der Druckglocke aufgebrachte Druck, was zu einer Verformung des Spannrahmens führt, weil die Spannkraft die vom Unterteil über den unteren Spannrahmen auf den oberen übertragen wird, bei Spannrahmen mit kleiner Öffnung an einem größeren Hebel angreift, als bei Spannrahmen mit großer Öffnung. Dabei werden die verhältnismäßig großen Kräfte auch auf die Dichtung übertragen, die zwischen der Druckglocke und dem oberen Spannrahmen vorgesehen ist. Diese Dichtung ist als Gummirundschnur ausgeführt und kann deshalb nicht beliebig verformt werden, um beispielsweise Toleranzen bei der Dickenabmessung des oberen Spannrahmens und auch unterschiedliche Dicken bei dem zu verformenden Material auszugleichen. Zur Vermeidung der größten Nachteile ist es auch schon bekannt geworden, beim Zusammenfahren der Druckglocke und des Unterteils Anschläge zu verwenden, die eine allzu große Krafteinwirkung auf den oberen Spannrahmen und die Dichtung begrenzen. Hierbei ist aber die Gesamtvorrichtung noch empfindlicher bei auftretenden Toleranzen am oberen Spannrahmenflansch und bei der Materialdicke des zu verformenden Materials.

Aufgabe der Erfindung ist es, eine Vorrichtung der eingangs erläuterten Art so auszugestalten, dass die Dichtung beim Zusammenfahren der Saug-Druckglocke und des Unterteils nicht gequetscht oder sonst beeinträchtigt wird, dass die Dichtwirkung dem herrschenden Innendruck in der Saug-Druckglocke anpassbar ist und dass Dickentoleranzen am Flansch des oberen Spannrahmens und bei dem zu verformenden Material in einem größeren Bereich ausgleichbar sind.

Diese Aufgabe wird bei einer Vorrichtung der weiter oben angegebenen Art erfindungsgemäß dadurch gelöst, dass die Dichtung als eine unter regelbarer Krafteinwirkung durch ein Druckmedium in ihrem Volumen ausdehnbare Dichtung ausgebildet ist.

Diese Ausgestaltung hat den Vorteil, dass der obere Spannrahmen durch eine Vorbelastung der Dichtung in der Formposition gehalten werden kann. Da die Dichtung willkürlich durch Krafteinwirkung, die regelbar ist, ausdehnbar ist, kann sie den jeweils herrschenden Druckverhältnissen im Innenraum der Saug-Druckglocke in ihrer Dichtwirkung angepasst werden. Da die Dichtung willkürlich unter Krafteinwirkung ausdehnbar ist, können Maßtoleranzen bei der Dickenabmessung des Flansches des oberen Spannrahmens und auch bei Änderungen der Dicke des zu verformenden Materials ohne weiteres ausgeglichen werden.

Die Vorteile dieser erfindungsgemäßen Ausgestaltung werden in Verbindung mit einer Vorrichtung der weiter oben angegebenen Art dann besonders augenscheinlich, wenn in weiterer Ausgestaltung der Erfindung die Saug-Druckglocke und dass das Formwerkzeug tragende Unterteil durch eine Kraftaufnahmeeinrichtung miteinander verbindbar sind, die die bei der Formgebung auftretenden Kräfte vollständig aufnimmt.

Durch diese Kraftaufnahmeeinrichtung werden die Saug-Druckglocke und das zugeordnete Unterteil sowie die dazwischen angeordneten Spannrahmen zusammengehalten und nicht wie beim Stande der Technik gegeneinander gedrückt.

Die bei der Druckverformung auftretenden hohen Kräfte werden also durch die Kraftaufnahmeeinrichtung aufgenommen, so dass insbesondere auf die Spannrahmen nur wesentlich geringere Kräfte einwirken, als dies bei einem Gegeneinanderdrücken der beiden Teile der Fall war, weil durch das Gegeneinanderdrücken von Saug-Druckglocke und Unterteil diese gegenseitigen Anpresskräfte auch über die Spannrahmen übertragen werden. Werden dagegen entsprechend der vorliegenden Erfindung die Saug-Druckglocke und das Unterteil durch außen angebrachte Kraftaufnahmeeinrichtungen zusammengehalten, so befinden sich die beiden zwischen der Saug-Druckglocke und dem Unterteil angeordneten Rahmen in einem Zustand, der weitgehend frei von den enormen Kräften ist, weil die sich aus dem Druck von etwa 4bar und der Fläche der Saug-Druckglocke im Trennbereich ergebende Kraft nicht auf den Spannrahmen und das Formwerkzeug und somit auf das Unterteil wirkt, sondern diese Kräfte wirken über das Formwerkzeug auf das Unterteil, wo sie aber durch die außen angeordneten Verriegelungsvorrichtungen aufgenommen werden, so dass eine Kraftübertragung insbesondere über die Spannrahmen weitgehend entfällt. Selbstverständlich wirken auf die Spannrahmen Kräfte, insbesondere, wenn diese eine wesentlich kleinere Öffnung freigeben, als dies der Saug-Druckglockenfläche im Trennbereich entspricht, jedoch können diese Kräfte durch entsprechende Formgebung der Spannrahmen aufgenommen werden, weil sie wesentlich geringer sind als bei einer Übertragung der gesamten Kräfte über den Spannrahmen auf das Unterteil, wie dies beim Stande der Technik der Fall ist.

Durch den Begriff *"Saug-Druckglocke"* soll zum Ausdruck gebracht werden, dass vor der Druckverformung die Folie oder Platte durch Saugwirkung in die Saug-Druckglocke hineingezogen und damit vorverformt wird.

Vorzugsweise weist die als Verriegelungseinrichtung ausgebildete Kraftaufnahmeeinrichtung mehrere am Umfang der Saug-Druckglocke fest angeordnete Verriegelungsstangen auf, die im zusammengefügten Zustand von Saug-Druckglocke und Unterteil durch am Unterteil angeordnete Kupplungseinrichtungen festlegbar sind. Diese Kupplungseinrichtungen können als Schnellspanneinrichtungen ausgebildet sein, die die Enden der Verriegelungsstangen erfassen und festhalten. Durch entsprechende Dimensionierung und Auswahl der notwendigen Anzahl der Verriegelungsstangen können die sehr hohen Kräfte durch diese Verriegelungsstangen und ihre Kupplungseinrichtungen aufgenommen werden, wobei die Kupplungseinrichtungen formschlüssig an den Enden der Verriegelungsstangen angreifen, so dass hier keine allzu großen Spannkräfte aufgebracht werden müssen, um die ineinandergerasteten Teile, d.h. die Enden der Verriegelungsstangen und Teile der Kupplungs-einrichtung zusammenzuhalten.

Die Vorteile der erfindungsgemäßen Ausgestaltung hinsichtlich der Anordnung einer ausdehnbaren Dichtung werden auch dann erreicht, wenn die Saug-Druckglocke und das Unterteil durch jeweilige Antriebsvorrichtungen gegeneinander drückbar sind, insbesondere wenn die gegenseitige Anpresskraft durch Anschläge begrenzt wird.

Die Dichtung zwischen der Saug-Druckglocke und dem oberen Spannrahmen, die bisher durch die äußeren Andrückkräfte stark zusammengedrückt wurde, wird nun von den großen Kräften über die Verriegelungseinrichtung entlastet. In Weiterbildung der Erfindung ist die Dichtung in einer Nut der Saug-Druckglocke aufgenommen und durch ein Druckmedium gegen den oberen Spannrahmen zur Abdichtung zwischen Saug-Druckglocke und Spannrahmen andrückbar. Die Dichtung unterliegt bei der erfindungsgemäßen Ausgestaltung nicht mehr den gegeneinander gerichteten äußeren Andrückkräften, sondern wird jetzt nur noch so stark durch ein Druckmedium belastet, wie dies zur Abdichtung notwendig ist, um einen Abbau des Überdrucks in der Saug-Druckglocke zu vermeiden.

Eine weitere vorteilhafte Ausgestaltung besteht darin, dass die Dichtung als aufblasbare Schlauchdichtung ausgebildet ist. Diese ausdehnbare Dichtung braucht nur dem Innendruck in der Saug-Druckglocke bzw. in dem engen Spalt zwischen Saug-Druckglocke und oberen Spannrahmen zu widerstehen und wird keinen Andrückkräften unterworfen, wie dies bei den bekannten Vorrichtungen der Fall ist.

Vorzugsweise ist die Saug-Druckglocke durch eine Antriebseinrichtung höhenverschiebbar, um insbesondere bei Positivformwerkzeugen eine Entformung zu ermöglichen.

In weiterer Ausgestaltung der Erfindung ist das Unterteil samt Formwerkzeug und unterem Spannrahmen durch eine Antriebseinrichtung gegen die Saug-Druckglocke verfahrbar. Das Unterteil und das Formwerkzeug sind an eine Unterdruckquelle anschließbar.

Zur leichteren Handhabung des oberen Spannrahmens ist vorgesehen, dass der obere Spannrahmen an der Saug-Druckglocke durch hydraulisch oder pneumatisch betätigbare Arbeitszylinder in Position haltbar ist.

Die Erfindung wird nachfolgend anhand eines Ausführungsbeispieles näher erläutert. In der Zeichnung zeigen:
- **Figur 1:**: eine Vorrichtung zur Druckluftverformung von thermoplastischen Materialien in ausgefahrener Stellung mit großem Spannrahmen;
- **Figur 2:**: die Vorrichtung nach Figur 1 in zusammengefahrener Stellung;
- **Figur 3:**: die Vorrichtung nach Figur 1 mit einem wesentlich verkleinerten Spannrahmen in ausgefahrener Stellung; und
- **Figur 4:**: die Vorrichtung nach Figur 3 in zusammengefahrener Stellung.

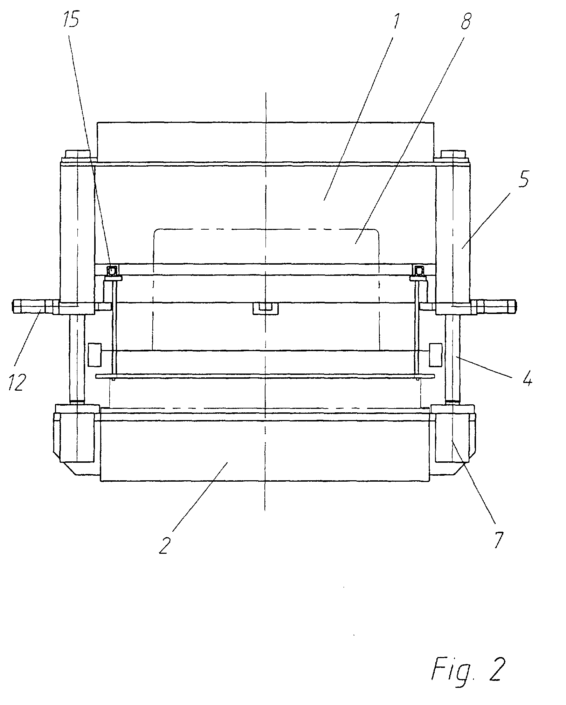

Die Vorrichtung zum Verformen von thermoplastischen Materialien, d.h. zur Herstellung von Formkörpern, beispielsweise Kühlschrankinnenverkleidungen, umfasst eine obenliegende Saug-Druckglocke 1, ein Unterteil 2 sowie eine mit 3 bezeichnete Verriegelungseinrichtung. Diese umfasst Verriegelungsstangen 4, die in Halterungen 5 eingesetzt sind, welche fest mit der Saug-Druckglocke verbunden sind. Die Verriegelungsstangen 4 weisen an ihren unteren Enden besonders angepasste Endstücke 6 auf, die mit jeweils einer Kupplungseinrichtung 7 zusammenwirken, welche am Unterteil befestigt sind, wordurch eine Schnellverriegelung geschaffen ist. Mit Hilfe dieser Verriegelungseinrichtung ist es möglich die Saug-Druckglocke 1 und das Unterteil 2 im zusammengefahrenen Zustand entsprechend Figur 2 zu halten und zwar unabhängig davon, wie hoch der Druck in der Saug-Druckglocke und die sich hieraus ergebende Kraft ist, die die Saug-Druckglocke von dem Unterteil zu trennen sucht. Sowohl Saug-Druckglocke 1 als auch Unterteil 2 sind in Vertikalrichtung verfahrbar.

Auf dem Unterteil 2 befindet sich ein Formwerkzeug 8 und ein unterer Spannrahmen 9. Ein entsprechender oberer Spannrahmen 10 ist am oberen Teil, d.h. an der Saug-Druckglocke 1 mittels Arbeitszylindern 11 gehalten, die mit entsprechenden Schiebern 12 am oberen Spannrahmen angreifen. Die zu verformende Folie oder Platte aus einem thermoplastischen Kunststoff ist mit 13 bezeichnet und wird in den Bereich zwischen die beiden Spannrahmen 9 und 10 mittels beidseitig angeordneter Förderketten 14 gezogen. Die Abdichtung zwischen dem oberen Spannrahmen 10 und der Saug-Druckglocke 1 erfolgt durch eine Dichtung 15, die am Umfangsrand der offenen Seite der Saug-Druckglocke 1 angeordnet ist und gegen den Flansch 16 des oberen Spannrahmens 10 andrückbar ist. Hierzu ist die Dichtung mit einem Druckmedium beaufschlagbar, so dass sie nicht nur zur Abdichtung zwischen oberen Spannrahmen und Saug-Druckglocke dient, sondern auch zum Ausgleich einer Toleranz am oberen Spannrahmen 10 oder der Folie 13 dient. Zur Herstellung eines Formteiles wird die vorher aufgeheizte Folie 13 mittels der Förderketten 14 in den Bereich zwischen die Spannrahmen 9 und 10 eingezogen, worauf die Saug-Druckglocke 1 und das Unterteil 2 in die in Figur 2 ersichtliche Stellung zusammengefahren und dort gegeneinander verriegelt werden. Der untere Spannrahmen 9 ist durch einen zusätzlichen Antrieb gegen die Folie 13 andrückbar. Hierauf beginnt ein Vorsaugvorgang, bei dem die Folie in die Saug-Druckglocke hineingezogen wird. Nach dem Vorsaugvorgang wird Druckluft in die Saug-Druckglocke eingeführt, so dass die vorgeformte Folie oder Platte an das Formwerkzeug 8 angedrückt wird, so dass der entstehende Formkörper an seiner Innenseite exakt der Formgebung des Formwerkzeuges 8 entspricht. Der eigentliche Formvorgang wird hier nicht näher beschrieben, weil dies nicht Gegenstand der Erfindung ist.

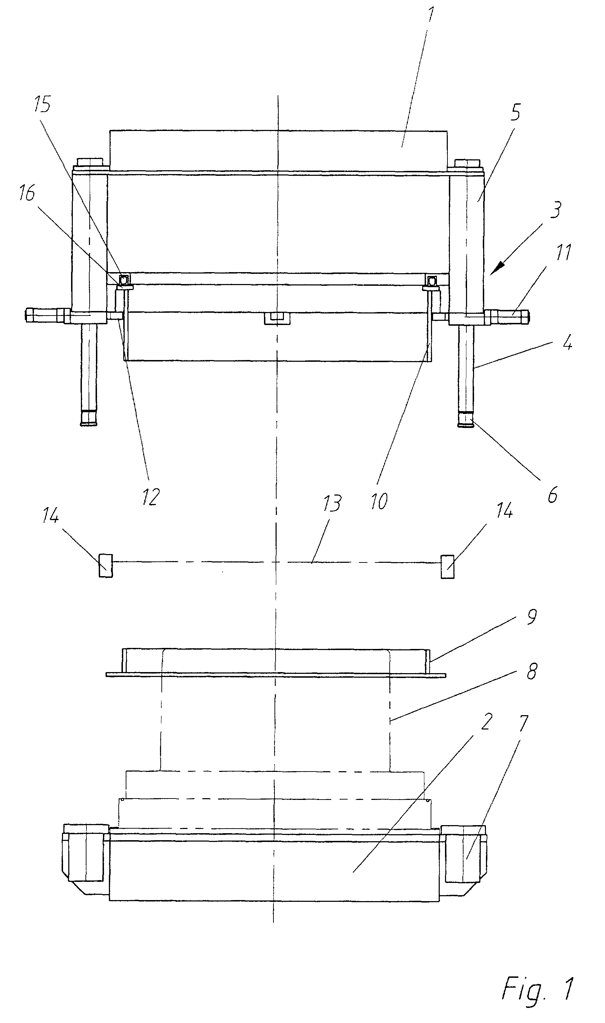

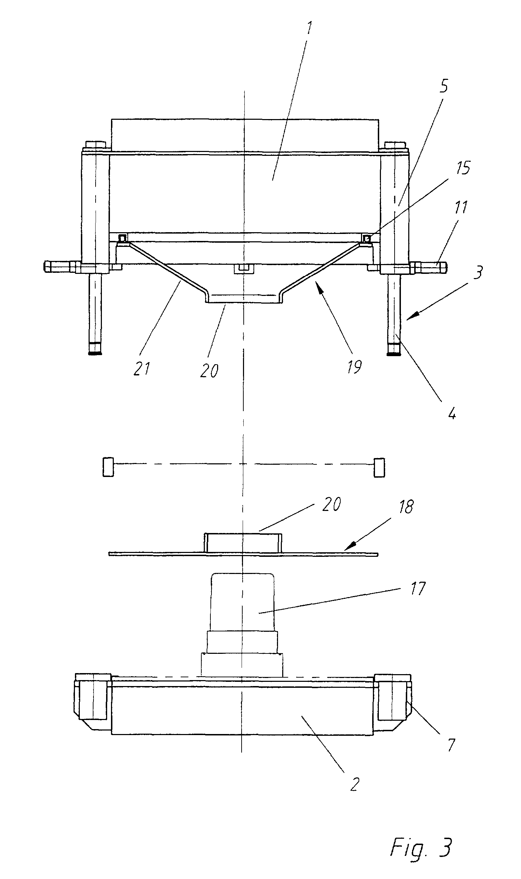

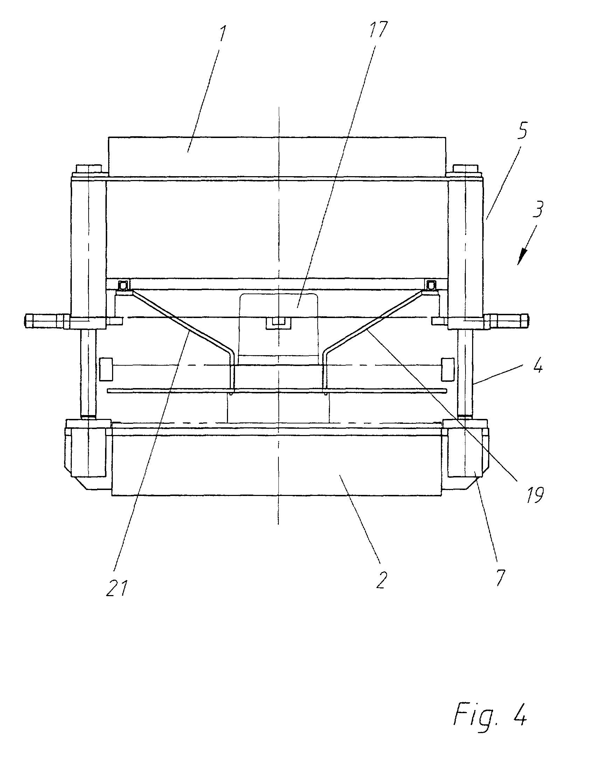

In den Figuren 3 und 4 ist eine Abänderung dargestellt, die den Vorteil der erfindungsgemäßen Ausgestaltung deutlich zum Ausdruck bringt. Die Abänderung besteht darin, dass andere Spannrahmen zur Anwendung kommen, die in ihrer Durchgangsfläche für ein wesentlich kleineres Formwerkzeug 17 vorgesehen sind. Die Spannrahmen sind hier mit 18 und 19 bezeichnet. Aus den Darstellungen in den Figuren 3 und 4 ist ersichtlich, dass die mit 20 bezeichnete Durchtrittsfläche für das Formwerkzeug 17 wesentlich kleiner ist als dies bei der Ausführungsform nach den Figuren 1 und 2 der Fall ist. Hieraus ergibt sich eine verhältnismäßig große Fläche 21 zwischen der Dichtung 15 und der Öffnung 20 im Spannrahmen 19. Auf diese Fläche wirkt zwar der in der Saug-Druckglocke zur Verformung notwendige Druck, jedoch ist der Spannrahmen 19 frei von den Kräften, die beim Stande der Technik auf den Spannrahmen 19 übertragen werden, wenn die Saug-Druckglocke und das Unterteil zusammengepresst werden. Diese Kräfte entfallen, so dass der Spannrahmen 19 nur so stabil ausgeführt werden muß, dass er den auf die volle Fläche wirkenden Druck, d.h. auf die zwischen der Dichtung 15 und der Öffnung 20 sich ergebenden Fläche wirkenden Druck aufnehmen kann. Diese Belastung ist nicht so groß, da sich der obere Spannrahmen 19 an seinem Öffnungsrand auf dem unteren Spannrahmen 18 abstützt. Dieser Druck ist wesentlich geringer als dies beim Stand der Technik der Fall war, wo über den Spannrahmen die gesamte Kraft für das Zusammenpressen der Saug-Druckglocke und des Unterteiles ein-gewirkt hat.

Nicht dargestellt ist einerseits die notwendige Antriebseinrichtung, um die Saug-Druckglocke 1 in Position in einer Fertigungsstraße für den Fertigungsvorgang und anschließend in die Entformstellung zu fahren. Weiterhin nicht dargestellt ist ein Antrieb, der das Unterteil 2 samt Formwerkzeug 17 und Spannrahmen 9 bzw. 18 nach oben in die verriegelte Stellung fährt, wie dies in den Figuren 2 und 4 dargestellt ist.

## Patentansprüche

1. Vorrichtung zum Verformen von thermoplastischen Materialien, umfassend eine Saug-Druckglocke (1), einen oberen Spannrahmen (10, 19), einen unteren Spannrahmen (9), zwischen denen das zu verformende Material (13) einspannbar ist, und ein Unterteil (2) mit Formwerkzeug (8), wobei zwischen Saug-Druckglocke (1) und dem oberen Spannrahmen (10, 19) eine Dichtung (15) vorgesehen ist, **dadurch gekennzeichnet, dass** die Dichtung (15) als eine unter regelbarer Krafteinwirkung durch ein Druckmedium in ihrem Volumen ausdehnbare Dichtung ausgebildet ist.

2. Vorrichtung nach Anspruch 1, wobei die Saug-Druckglocke (1) und das das Formwerkzeug (8, 17) tragende Unterteil (2) durch eine Kraftaufnahmeeinrichtung (3) miteinander verbindbar sind, die die bei der Formgebung auftretenden Kräfte vollständig aufnimmt.

3. Vorrichtung nach Anspruch 2, wobei die Kraftaufnahmeeinrichtung, als Verriegelungseinrichtung (3) ausgebildet, mehrere am Umfang der Saug-Druckglocke (1) fest angeordnete Verriegelungsstangen (4) aufweist, die im zusammengefügten Zustand von Saug-Druckglocke (1) und Unterteil (2) durch am Unterteil angeordnete Kupplungseinrichtungen (7) festlegbar sind.

4. Vorrichtung nach Anspruch 1, wobei die Saug-Druckglocke (1) und das Unterteil (2) durch jeweilige Antriebsvorrichtungen gegeneinander drückbar sind.

5. Vorrichtung nach einem der Ansprüche 1 bis 4, wobei die Dichtung (15) in einer Nut der Saug-Druckglocke (1) aufgenommen und durch ein Druckmedium gegen den oberen Spannrahmen (10, 19) zur Abdichtung zwischen Saug-Druckglocke (1) und Spannrahmen (10, 19) andrückbar ist.

6. Vorrichtung nach einem der Ansprüche 1 bis 4, wobei die Dichtung (15) als aufblasbare Schlauchdichtung ausgebildet ist.

7. Vorrichtung nach einem der Ansprüche 1 bis 5, wobei die Saug-Druckglocke (1) durch eine Antriebseinrichtung höhenverschiebbar ist.

8. Vorrichtung nach einem der Ansprüche 1 bis 7, wobei das Unterteil (2) samt Formwerkzeug (8, 17) und Spannrahmen (9, 18) durch eine Antriebseinrichtung gegen die Saug-Druckglocke (1) verfahrbar ist.

9. Vorrichtung nach einem der Ansprüche 1 bis 8, wobei der obere Spannrahmen (10, 19) an der Saug-Druckglocke (1) durch antreibbare (11) Schieber (12) in Position haltbar ist.

## Claims

1. Device for deforming thermoplastic materials, comprising a suction pressure bell (1), an upper clamping frame (10, 19), a lower clamping frame (9), between which clamping frames the material to be deformed (13) can be clamped, and a bottom part (2) with forming tool (8), a seal (15) being provided between the suction pressure bell (1) and the upper clamping frame (10, 19), **characterized in that** the seal (15) is configured as a seal which, under adjustable force action by a pressure medium, is expandable in terms of its volume.

2. Device according to Claim 1, wherein the suction pressure bell (1) and the bottom part (2) bearing the forming tool (8, 17) can be connected one to the other by a force-absorbing mechanism (3), which fully absorbs the forces generated in the shaping.

3. Device according to Claim 2, wherein the force-absorbing mechanism, configured as a locking mechanism (3), has a plurality of locking bars (4), which are fixedly disposed on the periphery of the suction pressure bell (1) and which, in the joined-together state of suction pressure bell (1) and bottom part (2), can be secured by coupling mechanisms (7) disposed on the bottom part.

4. Device according to Claim 1, wherein the suction pressure bell (1) and the bottom part (2) can be pressed one against the other by respective drive devices.

5. Device according to one of Claims 1 to 4, wherein the seal (15) is accommodated in a groove in the suction pressure bell (1) and can be pressed by a pressure medium against the upper clamping frame (10, 19) for seal-closure between suction pressure bell (1) and clamping frame (10, 19).

6. Device according to one of Claims 1 to 4, wherein the seal (15) is configured as an inflatable hose seal.

7. Device according to one of Claims 1 to 5, wherein the suction pressure bell (1) can be adjusted in height by a drive mechanism.

8. Device according to one of Claims 1 to 7, wherein the bottom part (2), and forming tool (8, 17) and clamping frame (9, 18), can be moved towards the suction pressure bell (1) by a drive mechanism.

9. Device according to one of Claims 1 to 8, wherein the upper clamping frame (10, 19) can be held in position on the suction pressure bell (1) by drivable (11) push rods (12).

## Revendications

1. Dispositif d'usinage de matériaux thermoplastiques, qui comprend une cloche aspirante refoulante (1), un cadre supérieur de serrage (10, 19) et un cadre inférieur de serrage (9) entre lesquels on peut serrer le matériau à déformer (13) et qui comprend une partie inférieure (2) qui présente un outil de formage (8), un joint d'étanchéité (15) étant prévu entre la cloche aspirante refoulante (1) et le cadre supérieur de serrage (10, 19), **caractérisé en ce que** le joint d'étanchéité (15) est configuré comme joint d'étanchéité qui peut se dilater sous l'action réglable d'une force exercée par un fluide sous pression.

2. Dispositif selon la revendication 1, dans lequel la cloche aspirante refoulante (1) et la partie inférieure (2) qui porte l'outil de formage (8, 17) peuvent être reliées l'une à l'autre par un dispositif de reprise de force (3) qui reprend complètement les forces qui sont exercées lors de la mise en forme.

3. Dispositif selon la revendication 2, dans lequel le dispositif de reprise de force, configuré comme dispositif de verrouillage (3), présente plusieurs barres de verrouillage (4) qui sont agencées fixement à la périphérie de la cloche aspirante refoulante (1) et qui, lorsque la cloche aspirante refoulante (1) et la partie inférieure (2) sont jointes, peuvent être fixées par l'intermédiaire de dispositifs d'accouplement (7) agencés sur la partie inférieure.

4. Dispositif selon la revendication 1, dans lequel la cloche aspirante refoulante (1) et la partie inférieure (2) peuvent être repoussées l'une contre l'autre par des dispositifs d'entraînement respectifs.

5. Dispositif selon l'une des revendications 1 à 4, dans lequel le joint d'étanchéité (15) est logé dans une rainure de la cloche aspirante refoulante (1) et peut être repoussé par un fluide sous pression contre le cadre supérieur de serrage (10, 19) pour assurer l'étanchéité entre la cloche aspirante refoulante (1) et le cadre de serrage (10, 19).

6. Dispositif selon l'une des revendications 1 à 4, dans lequel le joint d'étanchéité (15) est configuré comme joint d'étanchéité tubulaire gonflable.

7. Dispositif selon l'une des revendications 1 à 5, dans lequel la cloche aspirante refoulante (1) peut être déplacée en hauteur au moyen d'un dispositif d'entraînement.

8. Dispositif selon l'une des revendications 1 à 7, dans lequel l'ensemble formé de la partie inférieure (2), de l'outil de formage (8, 17) et du cadre de serrage (9, 18) peut être déplacé contre la cloche aspirante refoulante (1) au moyen d'un dispositif d'entraînement.

9. Dispositif selon l'une des revendications 1 à 8, dans lequel le cadre supérieur de serrage (10, 19) peut être maintenu en position sur la cloche aspirante refoulante (1) au moyen de coulisseaux (12) aptes à être entraînés (11).
